# EUROPEAN PATENT APPLICATION

(11) **EP 4 810 352 A1**
(43) Date of publication of application: **23.09.2026**
(21) Application number: 25757691.8
(22) Date of filing: 17.02.2025
(51) Int. Cl.: B62D 24/00

(54) **BODY-ON-FRAME PICKUP TRUCK**

(30) Priority: 20.02.2024 CN 202410189830
(71) Applicant: Zhejiang Geely Holding Group Co., Ltd., Hangzhou, Zhejiang 310051 (CN); Radar New Energy Automobile (Zhejiang) Co., Ltd., Hangzhou, Zhejiang 311228 (CN)
(72) Inventor: LI, Hailian, Hangzhou, Zhejiang 310051 (CN)
(74) Representative: Murgitroyd & Company
(86) International application number: PCT/CN2025/077657
(87) International publication number: WO 2025/176097

(57) **Abstract**

Provided is a body-on-frame pickup truck, including a vehicle frame (100) and a vehicle body (200) connected to the vehicle frame. The vehicle body includes an occupant compartment (210) and a cargo box (220), which are integrally provided; a plurality of rigid connection points (401, 402, 403, 404, 405, 406, 407, 408, 409, 410) are disposed between the vehicle frame and the vehicle body, and the plurality of rigid connection points cooperate with a plurality of fasteners (300) to enable a rigid connection between the vehicle body and the vehicle frame. The occupant compartment and the cargo box are integrally connected to each other, such that the connection between the occupant compartment and the cargo box is enhanced, and the appearance, the stability of the cargo box, the collision safety, and the handling stability of the pickup truck are improved. Moreover, the plurality of rigid connection points cooperating with the fasteners are provided to enable the rigid connection between the vehicle body and the vehicle frame, improving the bending and torsional rigidity of the pickup truck and further enhancing the driving safety.

## Description

### CROSS-REFERENCE TO RELATED APPLICATIONS

The present disclosure claims priority to Chinese Patent Application No. 202410189830.7, filed on February 20, 2024, which is incorporated herein by reference in its entirety.

### TECHNICAL FIELD

The present disclosure relates to, but is not limited to, the field of vehicle technologies, and in particular, to a body-on-frame pickup truck.

### BACKGROUND

Pickup trucks are a common means of cargo transport. With the rapid development of the vehicle industry, people are continuously putting forward higher requirements for the safety and comfort of pickup trucks.

### SUMMARY

The following is a brief summary of subject matter described in detail herein. This summary is not intended to be limiting as to the scope of the claims.

The present disclosure provides a body-on-frame pickup truck, which can improve torsional rigidity and collision safety.

The present disclosure provides a body-on-frame pickup truck, including a vehicle frame and a vehicle body connected to the vehicle frame, the vehicle body includes an occupant compartment and a cargo box, and the occupant compartment and the cargo box are integrally provided; and a plurality of rigid connection points are provided between the vehicle frame and the vehicle body, and the plurality of rigid connection points cooperate with a plurality of fasteners to enable a rigid connection between the vehicle body and the vehicle frame.

Optionally, a pair of pillars are disposed on a rear side of the occupant compartment; a pair of upper side rails longitudinally extending are disposed on two sides of the cargo box, respectively, and each of the upper side rails includes an upper side rail inner panel and an upper side rail outer panel; and the upper side rail outer panel is fixed to a corresponding one of the pillars by welding.

Optionally, the occupant compartment further includes a rear panel at the rear side thereof, and two ends of the rear panel are welded to the pair of pillars, respectively; and the rear panel includes a rear upper cross-member, and the upper side rail inner panel is fixed to the rear upper cross-member by welding.

Optionally, the vehicle body further includes an engine compartment at a front side of the occupant compartment; and the vehicle frame includes a front frame section connected to the engine compartment, a middle frame section connected to the occupant compartment, and a rear frame section connected to the cargo box.

Optionally, the vehicle frame includes a pair of frame rails arranged opposite to each other and a plurality of frame cross-members arranged between the pair of frame rails; each of the frame rails extends from the front frame section to the rear frame section; and the frame cross-members include a second cross-member and a third cross-member located in the middle frame section.

Optionally, the vehicle frame further includes a first connecting beam arranged longitudinally and a second connecting beam arranged transversely, two ends of the first connecting beam are respectively connected to the second cross-member and the third cross-member, and two ends of the second connecting beam are respectively connected to the first connecting beam and a corresponding one of the frame rails.

Optionally, a floor, a seat cross-member, and a sill are further provided in the occupant compartment, the floor and the seat cross-member are rigidly connected to tops of the frame rails by corresponding ones of the fasteners, and the sill is rigidly connected to bottoms of the frame rails by corresponding ones of the fasteners.

Optionally, a middle portion of the floor is rigidly connected to the third cross-member by corresponding ones of the fasteners passing through the floor from bottom to top; and a rear end of the floor is rigidly connected to the frame rails by corresponding ones of the fasteners passing through the floor from bottom to top.

Optionally, for each of the frame rails, the frame rail includes a main body and a connecting portion protruding outward from the main body, and the connecting portion is located at a bottom of the frame rail, and the sill is rigidly connected to the connecting portion by corresponding ones of the fasteners passing through the connecting portion and the sill from bottom to top.

Optionally, the occupant compartment further includes a dash panel at a front end thereof, and a bottom end of the dash panel is rigidly connected to the second cross-member by corresponding ones of the fasteners.

Optionally, the frame cross-members further include a first cross-member located in the front frame section, and two ends of the first cross-member are disposed at front end surfaces of the pair of frame rails, respectively.

Optionally, the front frame section is rigidly connected to the engine compartment; and front end pillars are disposed on a front end of the engine compartment, and front ends of the frame rails are rigidly connected to bottoms of the front end pillars by corresponding ones of the fasteners.

Optionally, the frame cross-members further include a fifth cross-member and a sixth cross-member located in the rear frame section, and the sixth cross-member is disposed at rear end surfaces of the pair of frame rails and closes rear ends of the pair of frame rails.

Optionally, a first cargo box cross-member, a second cargo box cross-member, and a third cargo box cross-member are sequentially arranged at intervals at a bottom of the cargo box; the first cargo box cross-member is rigidly connected to the frame rails; the second cargo box cross-member is located above the fifth cross-member and is rigidly connected to the fifth cross-member; and the third cargo box cross-member is located above the sixth cross-member and is rigidly connected to the sixth cross-member.

Optionally, the front frame section and the rear frame section are higher than the middle frame section; and a front portion of each of the frame rails and a rear portion of each of the frame rails are both recessed toward an inner side of the vehicle body relative to a middle portion of each of the frame rails.

Optionally, the plurality of fasteners are symmetrically arranged.

In the body-on-frame pickup truck of the present disclosure, the occupant compartment and the cargo box are integrally connected to each other, such that the connection between the occupant compartment and the cargo box is enhanced, and the appearance, the stability of the cargo box, the collision safety and the handling stability of the pickup truck are improved. Moreover, the plurality of rigid connection points cooperating with the fasteners are provided to enable the rigid connection between the vehicle body and the vehicle frame, improving the bending and torsional rigidity of the pickup truck and further enhancing the driving safety.

It is to be understood that both the foregoing general description and the following detailed description are illustrative and explanatory only and are not restrictive of the present disclosure. Other aspects will be apparent upon reading and understanding the drawings and detailed description.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a perspective view of a vehicle body frame of a body-on-frame pickup truck according to the present disclosure.
FIG. 2 is an enlarged view of part A shown in FIG. 1.
FIG. 3 is an enlarged view of part B shown in FIG. 1.
FIG. 4 is a perspective view of a vehicle frame of a body-on-frame pickup truck according to the present disclosure.
FIG. 5 is a bottom view of the vehicle frame shown in FIG. 4.
FIG. 6 is a side view of the vehicle frame shown in FIG. 4.
FIG. 7 is a bottom view of a connection between a vehicle frame and a vehicle body according to the present disclosure.
FIG. 8 is an enlarged view of part C shown in FIG. 7.
FIG. 9 is a top view of a connection between a middle frame section and a vehicle body according to the present disclosure.
FIG. 10 is a perspective view of the vehicle body frame shown in FIG. 1 from another perspective.
FIG. 11 is an enlarged view of part D shown in FIG. 10.
FIG. 12 is a cross-sectional view of a connection between a vehicle frame and a vehicle body through an upper fastener according to the present disclosure.
FIG. 13 is a cross-sectional view of a connection between a vehicle frame and a vehicle body through a lower fastener according to the present disclosure.

Description of reference signs:
100, vehicle frame; 101, front frame section; 1010, front end surface; 102, middle frame section; 1021, battery pack receiving area; 103, rear frame section; 1030, rear end surface; 110, frame rail; 111, main body; 1111, main body inner plate; 1112, main body outer plate; 1113, overlapping portion; 112, connecting portion; 1121, bottom wall; 1122, connecting wall; 1123, top wall; 113, main body cavity; 114, connecting cavity; 115, mounting plate; 116, lug; 120, frame cross-member; 121, first cross-member; 122, second cross-member; 123, third cross-member; 124, fourth cross-member; 125, fifth cross-member; 126, sixth cross-member; 130, first connecting beam; 140, second connecting beam; 200, vehicle body; 210, occupant compartment; 211, floor; 212, seat cross-member; 2121, fixing portion; 2122, first seat cross-member; 2123, second seat cross-member; 2124, third seat cross-member; 2125, fourth seat cross-member; 213, sill; 2131, sill inner panel; 2132, sill outer panel; 2133, sill cavity; 2134, sill reinforcement; 214, pillar; 215, rear panel; 2151, rear upper cross-member; 216, dash panel; 220, cargo box; 221, upper side rail; 2211, upper side rail inner panel; 2212, upper side rail outer panel; 222, first cargo box cross-member; 223, second cargo box cross-member; 224, third cargo box cross-member; 230, engine compartment; 231, front end pillar; 300, fastener; 310, upper fastener; 320, lower fastener; 401 to 410, rigid connection points.

### DETAILED DESCRIPTION

Illustrative embodiments, examples of which are illustrated in the accompanying drawings, will be described in detail herein. When the following description refers to the drawings, like numerals in different drawings indicate the same or similar elements, unless otherwise indicated. The embodiments described in the following illustrative embodiments do not represent all embodiments consistent with the present disclosure. Rather, they are merely examples of devices and methods consistent with some aspects of the present disclosure as detailed in the appended claims.

The term used in the present disclosure is for the purpose of describing particular embodiments only and is not intended to be limiting of the present disclosure. Technical terms or scientific terms used in the present disclosure should have general meanings as understood by one of ordinary skill in the art to which the present disclosure belongs, unless otherwise defined. Terms, such as "first", "second", or the like, used in the specification and claims of the present disclosure do not indicate any order, quantity, or importance, but are merely used to distinguish between different components. Similarly, terms, such as "one", "a/an", or the like, do not indicate a quantity limitation, but indicate that there is at least one. The terms "a plurality of/multiple" and "several" refer to two or more. Unless otherwise indicated, terms, such as "front", "rear", "lower", "upper", "top", "bottom", and/or the like, are merely for ease of description, and are not limited to one position or one spatial orientation. Terms, such as "include", "comprise", or the like, mean that the elements or objects before "include" or "comprise" cover the elements or objects and equivalents thereof listed after "include" or "comprise", without excluding other elements or objects. Terms, such as "connect", "connect with each other", or the like, are not limited to physical or mechanical connections, and may include electrical connections, whether direct or indirect.

The terms used in this specification are for the purpose of describing specific embodiments only and are not intended to limit the embodiments of the present disclosure. As used in this specification and the appended claims, the singular forms, such as "a/an", "said" and "the", are also intended to include the plural forms, unless clearly indicated otherwise in the context. It should also be understood that the term "and/or" as used herein refers to and includes any or all possible combinations of one or more associated listed items.

The embodiments of the present disclosure will be described in detail below.

In the related art, an occupant compartment of a body-on-frame pickup truck is separated from the cargo box, and there is a gap between the occupant compartment and the cargo box, resulting in poor aesthetics of the side surface of the vehicle body, low stability of the cargo box, and low collision performance. At the same time, the frame and the vehicle body of the body-on-frame pickup truck are usually connected by flexible connections, resulting in poor torsional rigidity of the vehicle body and low safety performance while reducing riding comfort.

In view of this, the present disclosure provides a body-on-frame pickup truck, which can improve torsional rigidity and collision safety.

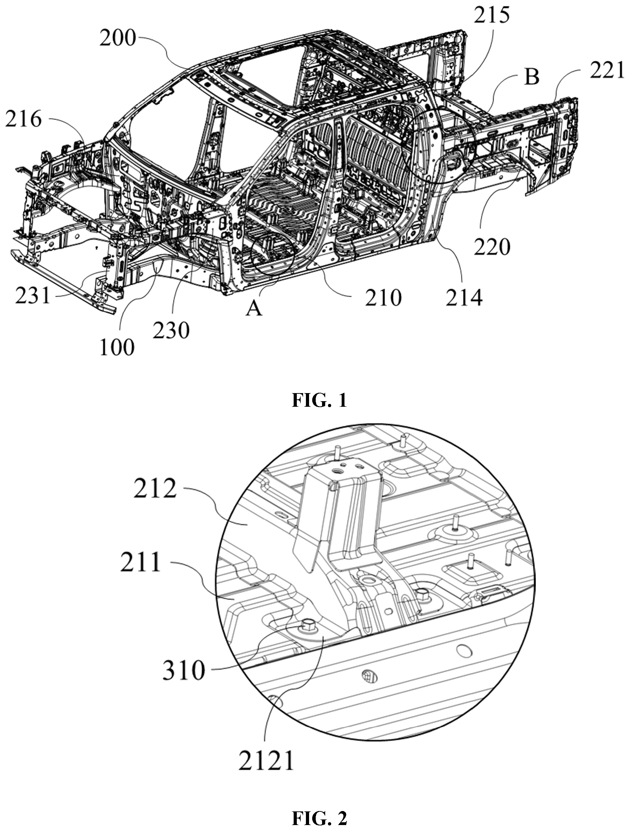

As shown in FIG. 1, the present disclosure provides a body-on-frame pickup truck, including a vehicle frame 100 and a vehicle body 200 connected to the vehicle frame 100. In the present disclosure, the front-rear direction refers to a length direction of the vehicle body, the inner-outer direction refers to a width direction of the vehicle body, and the up-down direction refers to a height direction of the vehicle body.

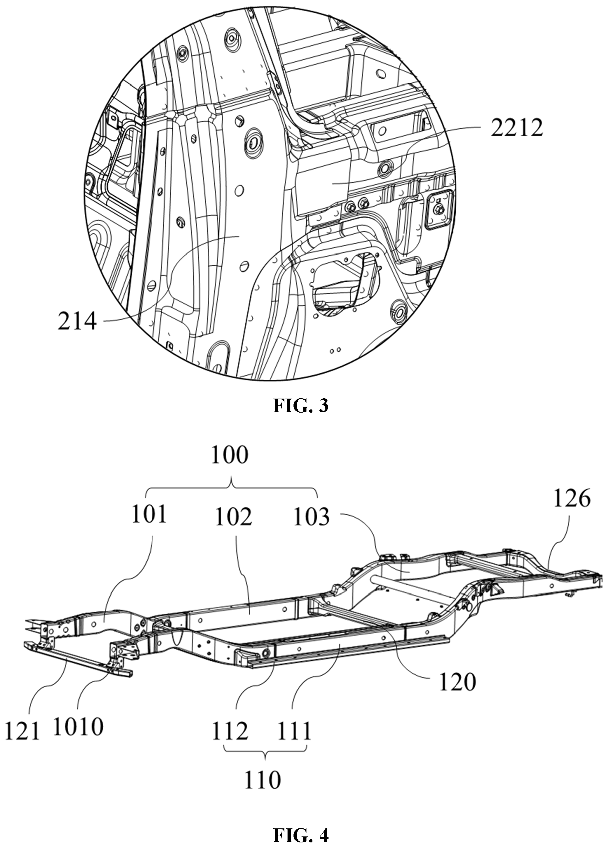

Referring to FIGS. 4 to 6, the vehicle frame 100 includes a pair of frame rails 110 disposed opposite to each other and a plurality of frame cross-members 120 disposed between the pair of frame rails 110. The plurality of frame cross-members 120 include a first cross-member 121, a second cross-member 122, a third cross-member 123, a fourth cross-member 124, a fifth cross-member 125, and a sixth cross-member 126 that are sequentially arranged from front to rear, parallel to each other and spaced apart from each other. Two ends of each of the frame cross-members 120 are respectively connected to the frame rails 110.

Specifically, in the present disclosure, two ends of the first cross-member 121 are disposed at front end surfaces 1010 of the pair of frame rails 110, and two ends of the sixth cross-member 126 are disposed at rear end surfaces 1030 of the pair of frame rails 110. In this way, the first cross-member 121 closes the front ends of the pair of frame rails 110, and the sixth cross-member 126 closes the rear ends of the pair of frame rails 110. The first cross-member 121, the sixth cross-member 126 and the pair of frame rails 110 together form a closed frame structure, which enhances the overall rigidity of the vehicle, reduces the deformation of the vehicle during bending, improves the anti-torsion performance, and simultaneously improves the handling performance and driving stability of the vehicle.

The vehicle body 200 includes an occupant compartment 210, a cargo box 220 at the rear side of the occupant compartment 210, and an engine compartment 230 at a front side of the occupant compartment 210. The vehicle frame 100 includes a front frame section 101 connected to the engine compartment 230, a middle frame section 102 connected to the occupant compartment 210, and a rear frame section 103 connected to the cargo box 220. The frame rails 110 extend from the front frame section 101 to the rear frame section 103. The first cross-member 121 is located in the front frame section 101, the second cross-member 122, the third cross-member 123 and the fourth cross-member 124 are located in the middle frame section 102, and the fifth cross-member 125 and the sixth cross-member 126 are located in the rear frame section 103. The fifth cross-member 125 divides the rear frame section 103 into two areas.

In this way, the pair of frame rails 110, the first cross-member 121 and the second cross-member 122 together enclose and form the front frame section 101. The pair of frame rails 110, the second cross-member 122, and the fourth cross-member 124 together enclose and form the middle frame section 102. The pair of frame rails 110, the fourth cross-member 124, and the sixth cross-member 126 together enclose and form the rear frame section 103. The front frame section 101, the middle frame section 102, and the rear frame section 103 are all frame-shaped structures. The front frame section 101, the middle frame section 102 and the rear frame section 103 are arranged along the length direction of the vehicle frame 100 and connected in sequence.

Through the combination of the frame rails 110 and the frame cross-members 120, the vehicle frame 100 is divided into front, middle and rear sections that are connected end to end to form a three-section structure, allowing a more rational design and arrangement of the overall space of the vehicle frame 100 to meet the different functional requirements of each section, thereby improving the flexibility and versatility of the vehicle. At the same time, the front frame section 101, the middle frame section 102 and the rear frame section 103 are all closed frame-shaped structures, which effectively improves the overall rigidity of the vehicle frame 100, and can effectively disperse and absorb the torsional force and impact force, thereby improving the torsional resistance and collision resistance of the vehicle.

Further, the positions of the front frame section 101 and the rear frame section 103 are both higher than the position of the middle frame section 102, and the position of the rear frame section 103 is higher than the position of the front frame section 101, enabling the vehicle to adapt to complex road conditions. Both the front portion of each of the frame rails 110 and the rear portion of each of the frame rails 110 are recessed toward the inner side in the width direction of the vehicle body relative to the middle portion of each of the frame rails 110, that is, they are arranged inward toward the inner side of the vehicle body, which can improve the stability and handling performance of the pickup truck. In addition, the first cross-member 121 is located at the lower side of the front end faces 1010 of the frame rails 110, and the middle portion of the sixth cross-member 126 is recessed downward to accommodate the overall vehicle configuration.

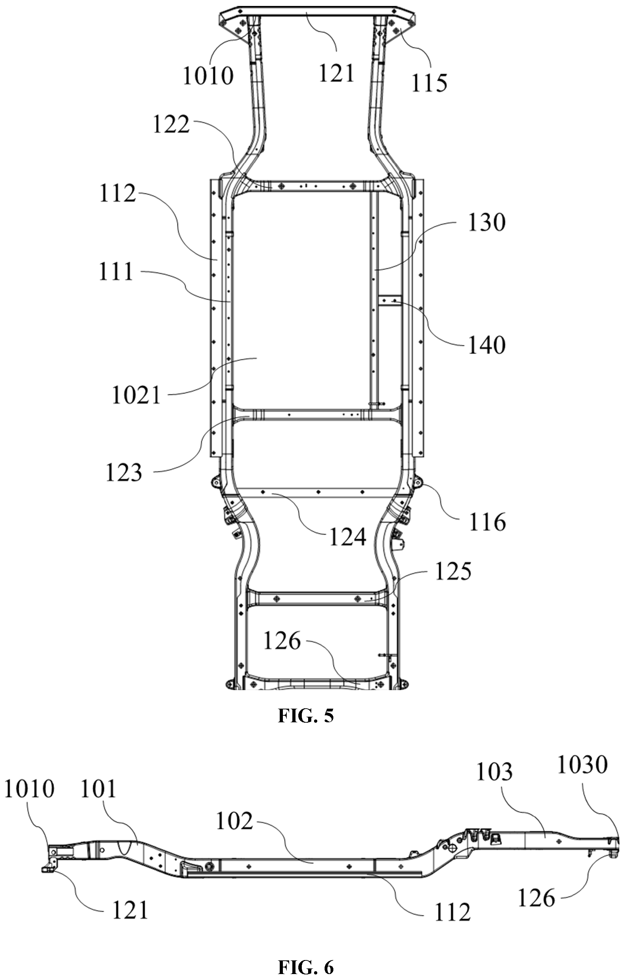

As shown in FIG. 5, the vehicle frame 100 further includes a first connecting beam 130 and a second connecting beam 140 located in the middle frame section 102. The first connecting beam 130 is longitudinally arranged, and two ends of the first connecting beam 130 are respectively connected to the second cross-member 122 and the third cross-member 123. A connection point between the first connecting beam 130 and the second cross-member 122 is offset from a midpoint of the second cross-member 122, and a connection point between the first connecting beam 130 and the third cross-member 123 is offset from a midpoint of the third cross-member 123.

In this way, the first connecting beam 130 divides the space enclosed by the pair of frame rails 110, the second cross-member 122 and the third cross-member 123 into two areas with different sizes. One of the frame rails 110 on one side, the second cross-member 122, the first connecting beam 130, and the third cross-member 123 together enclose and form a battery pack receiving area 1021. The larger one of the two areas is the battery pack receiving area 1021 to accommodate the battery pack of the pickup truck; the smaller one of the two areas is used to match the arrangement of the fuel lines.

The second connecting beam 140 is transversely arranged, and two ends of the second connecting beam 140 are respectively connected to the first connecting beam 130 and one of the frame rails 110 on the other side. A connection point between the first connecting beam 130 and the second connecting beam 140 is close to a midpoint of the first connecting beam 130. The arrangement of the second connecting beam 140 provides support for the first connecting beam 130, making the vehicle frame 100 firmer and more stable.

As shown in FIG. 1, the vehicle body 200 includes the occupant compartment 210, the cargo box 220, and the engine compartment 230. The engine compartment 230 is located on a front side of the occupant compartment 210 and is integrally formed with the occupant compartment 210, and the cargo box 220 is located on a rear side of the occupant compartment 210 and is integrally formed with the occupant compartment 210.

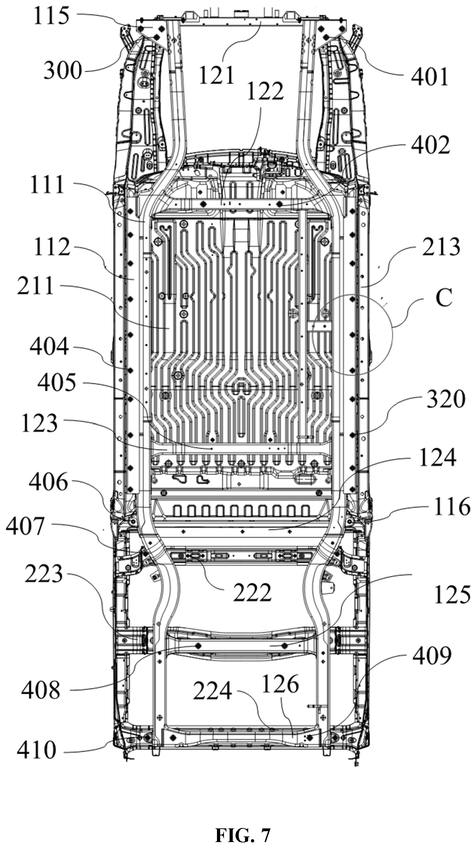

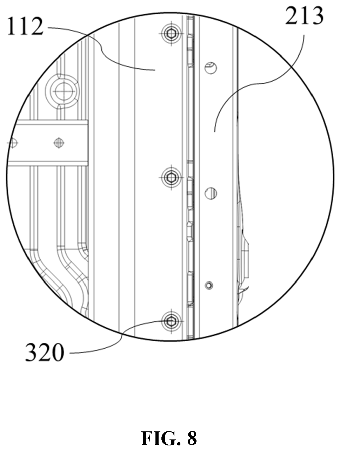

Referring to FIG. 7 to FIG. 9 simultaneously, the occupant compartment 210 is provided with a floor 211, a seat cross-member 212, a sill 213, and a dash panel 216. The floor 211 is laid on the bottom of the occupant compartment 210, and the seat cross-member 212 is mounted on the floor 211. That is, the floor 211 is disposed between the seat cross-member 212 and the vehicle frame 100.

The seat cross-member 212 includes a first seat cross-member 2122, a second seat cross-member 2123, a third seat cross-member 2124, and a fourth seat cross-member 2125 sequentially arranged from front to rear. The first seat cross-member 2122 and the second seat cross-member 2123 are arranged close to each other for mounting a front seat; and the third seat cross-member 2124 and the fourth seat cross-member 2125 are arranged close to each other for mounting a rear seat.

The pair of sills 213 are respectively disposed on two sides of the floor 211 and extend longitudinally. The dash panel 216 is located at a front end of the occupant compartment 210, separating the engine compartment 230 from the occupant compartment 210. The dash panel 216 is located above the second cross-member 122.

The cargo box 220 is provided with upper side rails 221 and a plurality of cargo box cross-members spaced apart from each other. The cargo box cross-members are located at the bottom of the cargo box 220, and include a first cargo box cross-member 222, a second cargo box cross-member 223, and a third cargo box cross-member 224 that are sequentially arranged parallel to each other and spaced apart from each other. The first cargo box cross-member 222 is disposed on a rear side of the fourth cross-member 124. The second cargo box cross-member 223 is disposed directly above the fifth cross-member 125. The third cargo box cross-member 224 is located at the rearmost end of the cargo box 220 and is disposed directly above the sixth cross-member 126.

A pair of front end pillars 231 are provided at the front end of the engine compartment 230, and the front end pillars 231 are disposed at the foremost end of the vehicle body 200.

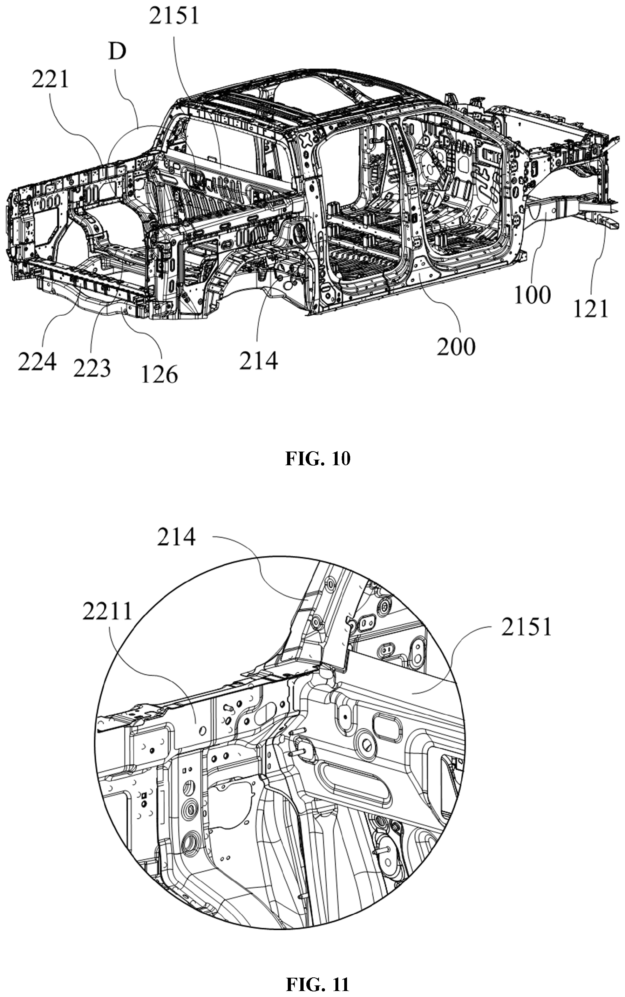

Referring to FIG. 3, FIG. 10, and FIG. 11 simultaneously, a pair of pillars 214 and a rear panel 215 are provided at the rear side of the occupant compartment 210. Two ends of the rear panel 215 are respectively connected to the pair of pillars 214, and the rear panel 215 separates the occupant compartment 210 from the cargo box 220. The pair of upper side rails 221 are located on two sides of the cargo box 220 and extend longitudinally. The pillars 214, the upper side rails 221, and the rear panel 215 are connected as a whole, so that the occupant compartment 210 and the cargo box 220 are integrally formed.

Specifically, the rear panel 215 includes a rear upper cross-member 2151. The height of the rear upper cross-member 2151 is substantially the same as the height of the upper side rails 221. The upper side rails 221 include an upper side rail inner panel 2211 and an upper side rail outer panel 2212. The upper side rail outer panel 2212 is connected to the pillar 214. The upper side rail inner panel 2211 is connected to the rear upper cross-member 2151.

In the present disclosure, the pillars 214, the upper side rails 221, and the rear panel 215 are connected and fixed by welding, which provides a stable connection, easy operation, and low cost. The pillar 214 is disposed near the cargo box 220. When the pickup truck is provided with a single row of seats, the occupant compartment 210 includes an A-pillar and a B-pillar, and in this case, the pillar 214 is the B-pillar. When the pickup truck is provided with two rows of seats, the occupant compartment 210 includes an A-pillar, a B-pillar, and a C-pillar, and in this case, the pillar 214 is the C-pillar. In the illustrated embodiment, the pickup truck is provided with two rows of seats, and the pillar 214 is the C-pillar.

In the body-on-frame pickup truck of the present disclosure, by connecting the occupant compartment 210 and the cargo box 220 as a whole, the connection between the occupant compartment 210 and the cargo box 220 is strengthened. On the one hand, the appearance of the pickup truck is free of obvious gaps, improving the aesthetics and overall mode of the vehicle body 200, simplifying the manufacturing process, and reducing the cost; on the other hand, a stronger and tighter connection is formed between the occupant compartment 210 and the cargo box 220, improving the connection stability of the cargo box 220 and the collision safety and handling stability of the vehicle body 200.

The vehicle frame 100 and the vehicle body 200 are provided with a plurality of rigid connection points, and the plurality of rigid connection points cooperate with the plurality of fasteners 300 to realize the rigid connection between the vehicle body 200 and the vehicle frame 100. The rigid connection means that two or more mechanical components are connected in a rigid manner such that relative movement between them cannot occur. A flexible connection means that two or more mechanical components are connected in a flexible manner, so that a certain degree of relative movement is allowed between the two or more mechanical parts. In the present disclosure, the fastener 300 is a combination of a bolt and a nut. It can be understood that at the rigid connection points between the vehicle frame 100 and the vehicle body 200, corresponding openings are provided in the vehicle frame 100 and the vehicle body 200, and the fastened rigid connection between the vehicle frame 100 and the vehicle body 200 is realized through the cooperation of the openings with the bolts and the nuts.

The fasteners 300 include an upper fastener 310 and a lower fastener 320. The upper fastener 310 is inserted from top to bottom, and the lower fastener 320 is inserted from bottom to top. The length of the lower fastener 320 is greater than the length of the upper fastener 310. The front frame section 101, the middle frame section 102, and the rear frame section 103 are all rigidly connected to the vehicle body 200 by fasteners 300.

Further, as shown in FIG. 7, the front frame section 101 is fixed to the engine compartment 230 by fasteners 300. A rigid connection point 401 is provided between the bottom of each front end pillar 231 and the respective frame rail 110. The front end of each frame rail 110 is rigidly connected to the bottom of the respective front end pillar 231 by fasteners 300. Specifically, the front end of each frame rail 110 is provided with a platform-like mounting plate 115 protruding outwardly, and the mounting plate 115 is connected to the front end pillar 231 through the lower fastener 320. Three lower fasteners 320 are provided between the front end pillar 231 and the frame rail 110 on each side. The number of rigid connection points 401 between the front end pillars 231 and the frame rails 110 is six.

The middle frame section 102 is fixed to the occupant compartment 210 by fasteners 300. The dash panel 216 is located above the second cross-member 122. A rigid connection point 402 is provided between the bottom end of the dash panel 216 and the second cross-member 122. The bottom end of the dash panel 216 is rigidly connected to the second cross-member 122 by a lower fastener 320. Specifically, there are two rigid connection points 402 and two lower fasteners 320 between the dash panel 216 and the second cross-member 122.

A rigid connection point 403 is provided among the seat cross-member 212, the floor 211, and the middle section of the frame rail 110. The floor 211 and both ends of the seat cross-member 212 are rigidly connected to the top of the frame rail 110 by upper fasteners 310. As shown in FIG. 2, both ends of each seat cross-member 212 are provided with fixing portions 2121 protruding longitudinally, and the fixing portions 2121 are used for receiving the upper fastener 310. In this way, the upper fastener 310 sequentially passes through the fixing portion 2121, the floor 211 and the vehicle frame 100 to fix the seat cross-member 212 to the vehicle frame 100.

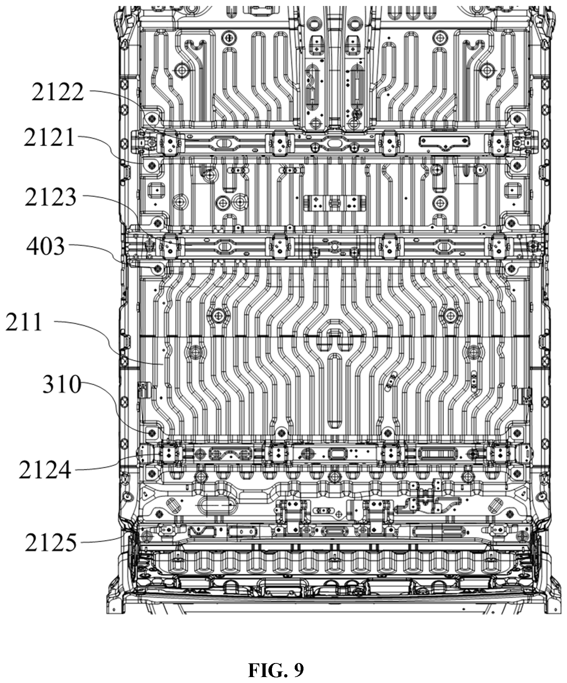

Referring to FIG. 9, each of the two ends of each of the first seat cross-member 2122, the second seat cross-member 2123, and the third seat cross-member 2124 is provided with fixing portions 2121 protruding forward and backward. Each of the two ends of the fourth seat cross-member 2125 is only provided with a fixing portion 2121 protruding forward. That is, in this embodiment, fourteen rigid connection points 403 are provided between the seat cross-member 212 and the frame rails 110, and the four seat cross-members 212 are fixed to the frame rails 110 by fourteen upper fasteners 310.

As shown in FIG. 7, a plurality of rigid connection points 404 spaced apart from each other are provided between the sills 213 and the frame rails 110. The sill 213 is rigidly connected to the bottom of the frame rail 110 by the lower fastener 320. Specifically, ten lower fasteners 320 are provided between the sill 213 and the frame rail 110 on each side. The number of rigid connection points 404 between the sills 213 and the frame rails 110 is twenty.

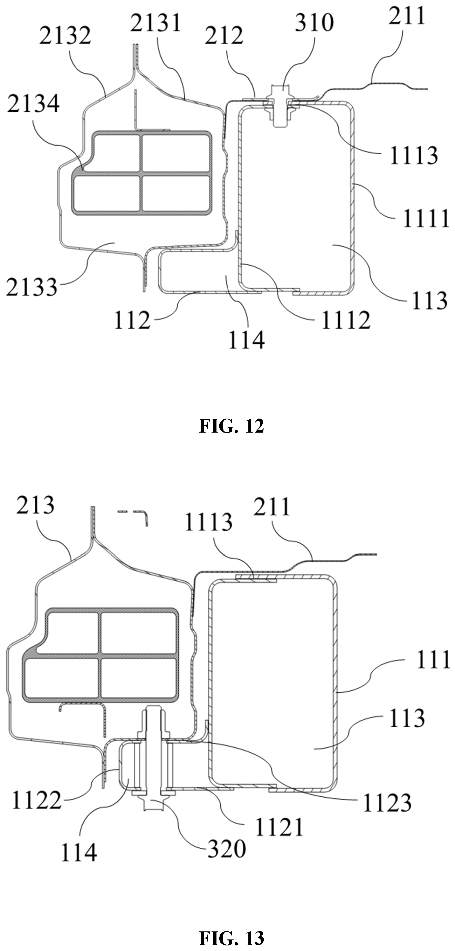

Furthermore, as shown in FIGS. 5, 12 and 13, each of the frame rails 110 includes a main body 111 and a connecting portion 112. The main body 111 is disposed lengthwise and extends from the front frame section 101 to the rear frame section 103. The connecting portion 112 protrudes outwardly from the main body 111 in the width direction of the vehicle body 200 and is located at the bottom of the frame rail 110. In the length direction of the vehicle body 200, the connecting portion 112 extends from the second cross-member 122 to a position between the third cross-member 123 and the fourth cross-member 124.

The fasteners 300 fixed to the vehicle body 200 are provided on the main body 111 or the connecting portion 112. In the present disclosure, the floor 211 and the seat cross-member 212 are fastened to the main body 111 by using the upper fasteners 310, and the sill 213 is fastened to the connecting portion 112 by using the lower fasteners 320.

The main body 111 is a closed frame, and a main body cavity 113 is formed in the main body 111. The main body 111 includes a main body inner plate 1111 and a main body outer plate 1112, and the main body inner plate 1111 and the main body outer plate 1112 together enclose and form the main body cavity 113. An upper end of the main body inner plate 1111 is overlapped with an upper end of the main body outer plate 1112 to form an overlapping portion 1113. The upper fastener 310 sequentially passes through the seat cross-member 212, the floor 211, and the overlapping portion 1113 from top to bottom to rigidly connect the seat cross-member 212 to the vehicle frame 100. The nut of the upper fastener 310 is located within the main body cavity 113.

The connecting portion 112 includes a bottom wall 1121, a connecting wall 1122, and a top wall 1123. The bottom wall 1121 is overlapped with the bottom surface of the main body 111 and extends outwardly, the connecting wall 1122 is bent upward from the outer end of the bottom wall 1121, and the top wall 1123 is bent inward from the upper end of the connecting wall 1122 and is connected to the main body 111. The bottom wall 1121, the connecting wall 1122, the top wall 1123, and the main body 111 together enclose and form a connecting cavity 114. The lower fastener 320 sequentially passes through the bottom wall 1121, the connecting cavity 114, the top wall 1123, and the sill 213 from bottom to top, to rigidly connect the sill 213 to the vehicle frame 100.

The sill 213 includes a sill inner panel 2131 and a sill outer panel 2132. The sill inner panel 2131 and the sill outer panel 2132 are joined together, and enclose and form a sill cavity 2133. An upper portion of the sill inner panel 2131 is connected to an outer side of the floor 211, and a lower portion of the sill inner panel 2131 is connected to the frame rail 110. The sill inner panel 2131 is disposed close to the main body 111, making the connection between the sill 213 and the frame rail 110 more compact. The bottom of the sill inner panel 2131 is attached to the connecting portion 112 to facilitate the passage of the lower fastener 320. An extruded sill reinforcement 2134 is provided in the sill cavity 2133. The nut of the lower fastener 320 is located within the sill cavity 2133.

As shown in FIG. 7, a rigid connection point 405 is provided between the middle portion of the floor 211 and the third cross-member 123. The middle portion of the floor 211 is rigidly connected to the third cross-member 123 by the fastener 300. A rigid connection point 406 is provided between the rear end of the floor 211 and the frame rail 110. The rear end of the floor 211 is rigidly connected to the frame rails 110 by the fasteners 300. The fasteners 300 each pass through the floor 211 from bottom to top. Specifically, each frame rail 110 is provided with a sheet-shaped lug 116 protruding outwardly, and the rear end of the floor 211 is fixed to the lug 116 by the lower fastener 320. There are two rigid connection points 405 and two lower fasteners 320 between the floor 211 and the third cross-member 123. There are two rigid connection points 406 and two lower fasteners 320 between the floor 211 and the frame rail 110.

The rear frame section 103 is fixed to the cargo box 220 by the fasteners 300. A rigid connection point 407 is provided between the first cargo box cross-member 222 and the frame rail 110, and the first cargo box cross-member 222 is rigidly connected to the frame rail 110 by the fastener 300. Specifically, the frame rail 110 is provided with a sheet-shaped lug (not shown) protruding outwardly, and the first cargo box cross-member 222 is fixed to the lug by the lower fastener 320. There are two rigid connection points 407 and two lower fasteners 320 between the first cargo box cross-member 222 and the frame rail 110.

A rigid connection point 408 is provided between the second cargo box cross-member 223 and the fifth cross-member 125, and the second cargo box cross-member 223 is rigidly connected to the fifth cross-member 125 by the lower fastener 320. There are two rigid connection points 408 and two lower fasteners 320 between the second cargo box cross-member 223 and the fifth cross-member 125.

A rigid connection point 409 is provided between the third cargo box cross-member 224 and the sixth cross-member 126, and a rigid connection point 410 is provided between the third cargo box cross-member 224 and the frame rail 110. Both the rigid connection point 409 and the rigid connection point 410 cooperate with the lower fasteners 320 to fix the third cargo box cross-member 224 to the vehicle frame 100. There are two rigid connection points 409 and two lower fasteners 320 between the third cargo box cross-member 224 and the sixth cross-member 126. There are two rigid connection points 410 and two lower fasteners 320 between the third cargo box cross-member 224 and the frame rail 110. The rigid connection point 410 is located outside of the rigid connection point 409.

By fixing the third cargo box cross-member 224 to both the frame rail 110 and the frame cross-member 120, the stability of the rigid connection between the rear frame section 103 and the cargo box 220 is improved. At the same time, since the third cargo box cross-member 224 is located at the rearmost end of the vehicle body 200, this fixing manner also further improves and ensures the anti-torsion performance and collision safety of the pickup truck.

A total of fifty-four rigid connection points are disposed between the vehicle frame 100 and the vehicle body 200, and the fifty-four rigid connection points cooperate with the fifty-four sets of fasteners 300 to achieve a tight connection between the vehicle frame 100 and the vehicle body 200. The plurality of fasteners 300 are generally symmetrically distributed, which facilitates the simplification of the assembly operation process.

Among the plurality of fasteners 300 connecting the vehicle frame 100 and the vehicle body 200, the frame cross-member 120 is rigidly connected to the vehicle body 200 by the lower fasteners 320. The rigid connection point 403 between the frame rail 110 and the seat cross-member 212 is fixed by the upper fastener 310, and other rigid connection points between the frame rail 110 and the vehicle body 200 are fixed by the lower fastener 320.

From another perspective, the fastener 300 may further include a first fastener and a second fastener. The first fastener is connected to the frame rail 110, and the second fastener is connected to the frame cross-member 120. Among the fifty-four rigid connection points, the rigid connection points 401, 403, 404, 406, 407, and 410 are disposed on the frame rail 110 to cooperate with the first fastener; and the rigid connection points 402, 405, 408, and 409 are disposed on the frame cross-member 120 to cooperate with the second fastener.

Specifically, at the front frame section 101, each frame rail 110 is provided with a platform-like mounting plate 115 protruding outwardly, and the front end pillar 231 is connected to the mounting plate 115 through the first fastener, which improves the stability of the front end structure of the pickup truck and improves the bending and torsional rigidity of the entire vehicle.

At the middle frame section 102, the dash panel 216 is connected to the second cross-member 122 through the second fastener, which improves the collision safety performance of the vehicle. The seat cross-member 212 and the floor 211 are connected to the main body 111 of the frame rail 110 through the first fastener, which not only improves the bending and torsional rigidity of the vehicle, but also enhances the strength and durability of the vehicle body 200.

The sill 213 is connected to the connecting portion 112 of the frame rail 110 through the first fastener, which can not only improve the bending and torsional rigidity of the vehicle, but also enhance the safety performance of the vehicle. The middle portion of the floor 211 is connected to the third cross-member 123 through the second fastener, which effectively improves the strength, mode characteristics and rigidity of the floor area of the vehicle body. The rear end of the floor 211 is connected to the lug 116 of the frame rail 110 through the first fastener, which effectively improves the mode characteristics of the rear panel area.

At the rear frame section 103, the first cargo box cross-member 222 and the third cargo box cross-member 224 are connected to the lugs of the frame rail 110 by the first fasteners. The second cargo box cross-member 223 is connected to the fifth cross-member 125 by using the second fastener. The third cargo box cross-member 224 and the sixth cross-member 126 are connected with each other by the second fastener, which not only improves the loading capacity of the cargo box 220, but also enhances the bending and torsional rigidity of the entire vehicle.

The pickup truck provided in the present disclosure has a body-on-frame structure, and the vehicle frame 100 and the vehicle body 200 are manufactured separately, thereby facilitating maintenance and providing high production efficiency. The vehicle frame 100 and the vehicle body 200 are rigidly connected with each other by the fastener 300, which improves the bending and torsional rigidity of the body-on-frame pickup truck and enhances the handling stability and durability.

On the one hand, the first fastener and the second fastener are respectively connected to the frame rail 110 and the frame cross-member 120, so that the connection between the vehicle frame 100 and the vehicle body 200 is more stable and firmer, and the impact on the vehicle can be simultaneously absorbed and dispersed in both lateral and longitudinal directions, thereby reducing the direct impact on the vehicle body 200 and improving the ride safety. On the other hand, the upper fastener 310 and the lower fastener 320 are respectively inserted from the upper and lower sides, which effectively limits the sliding of the vehicle body 200 relative to the vehicle frame 100, so that the vehicle frame 100 and the vehicle body 200 are more firmly connected together, thereby reducing the generation of vibration and noise, and improving the structural rigidity and riding comfort of the entire vehicle.

At the same time, the rigid connection between the vehicle frame 100 and the vehicle body 200 is adapted to the transformation of a pickup truck toward passenger-vehicle usage, which effectively improves the NVH (Noise, Vibration and Harshness) performance, and enhances the riding comfort of occupants and collision safety. In addition, compared with a flexible connection (for example, a rubber connection) between a vehicle frame and a vehicle body of a conventional body-on-frame pickup truck, the fastener 300 of the present disclosure realizes a direct connection between members through bolts and nuts, effectively saving space at the bottom of the vehicle, allowing a battery with a larger capacity to be arranged at the bottom of the vehicle, and effectively increasing the driving mileage of the pickup truck.

The foregoing descriptions are merely some implementations of the present disclosure, and are not intended to limit the present disclosure in any form. Although the present disclosure has been disclosed above in some embodiments, these embodiments are not intended to limit the present disclosure. Those skilled in the art can make some changes or modifications using the technical content disclosed above to produce equivalent embodiments without departing from the scope of the technical solutions of the present disclosure. However, any simple modifications, equivalent changes and modifications made to the above embodiments according to the technical essence of the present disclosure without departing from the content of the technical solutions of the present disclosure still fall within the scope of the technical solutions of the present disclosure.

## Claims

1. A body-on-frame pickup truck, comprising a vehicle frame and a vehicle body connected to the vehicle frame, wherein
the vehicle body comprises an occupant compartment and a cargo box, and the occupant compartment and the cargo box are integrally provided; and
a plurality of rigid connection points are provided between the vehicle frame and the vehicle body, and the plurality of rigid connection points cooperate with a plurality of fasteners to enable a rigid connection between the vehicle body and the vehicle frame.

2. The body-on-frame pickup truck according to claim 1, wherein
a pair of pillars are disposed on a rear side of the occupant compartment;
a pair of upper side rails longitudinally extending are disposed on two sides of the cargo box, respectively, and each of the upper side rails comprises an upper side rail inner panel and an upper side rail outer panel; and
the upper side rail outer panel is fixed to a corresponding one of the pillars by welding.

3. The body-on-frame pickup truck according to claim 2, wherein
the occupant compartment further comprises a rear panel at the rear side thereof, and two ends of the rear panel are welded to the pair of pillars, respectively; and
the rear panel comprises a rear upper cross-member, and the upper side rail inner panel is fixed to the rear upper cross-member by welding.

4. The body-on-frame pickup truck according to claim 1, wherein
the vehicle body further comprises an engine compartment at a front side of the occupant compartment; and
the vehicle frame comprises a front frame section connected to the engine compartment, a middle frame section connected to the occupant compartment, and a rear frame section connected to the cargo box.

5. The body-on-frame pickup truck according to claim 4, wherein
the vehicle frame comprises a pair of frame rails arranged opposite to each other and a plurality of frame cross-members arranged between the pair of frame rails;
each of the frame rails extends from the front frame section to the rear frame section; and
the frame cross-members comprise a second cross-member and a third cross-member located in the middle frame section.

6. The body-on-frame pickup truck according to claim 5, wherein
the vehicle frame further comprises a first connecting beam arranged longitudinally and a second connecting beam arranged transversely,
two ends of the first connecting beam are respectively connected to the second cross-member and the third cross-member, and
two ends of the second connecting beam are respectively connected to the first connecting beam and a corresponding one of the frame rails.

7. The body-on-frame pickup truck according to claim 5, wherein
a floor, a seat cross-member, and a sill are further provided in the occupant compartment,
the floor and the seat cross-member are rigidly connected to tops of the frame rails by corresponding ones of the fasteners, and
the sill is rigidly connected to bottoms of the frame rails by corresponding ones of the fasteners.

8. The body-on-frame pickup truck according to claim 7, wherein
a middle portion of the floor is rigidly connected to the third cross-member by corresponding ones of the fasteners passing through the floor from bottom to top; and
a rear end of the floor is rigidly connected to the frame rails by corresponding ones of the fasteners passing through the floor from bottom to top.

9. The body-on-frame pickup truck according to claim 7, wherein
for each of the frame rails,
the frame rail comprises a main body and a connecting portion protruding outward from the main body, and the connecting portion is located at a bottom of the frame rail, and
the sill is rigidly connected to the connecting portion by corresponding ones of the fasteners passing through the connecting portion and the sill from bottom to top.

10. The body-on-frame pickup truck according to claim 5, wherein the occupant compartment further comprises a dash panel at a front end thereof, and a bottom end of the dash panel is rigidly connected to the second cross-member through corresponding ones of the fasteners.

11. The body-on-frame pickup truck according to claim 5, wherein the frame cross-members further comprise a first cross-member located in the front frame section, and two ends of the first cross-member are disposed at front end surfaces of the pair of frame rails, respectively.

12. The body-on-frame pickup truck according to claim 4, wherein
the front frame section is rigidly connected to the engine compartment; and
front end pillars are disposed on a front end of the engine compartment, and front ends of the frame rails are rigidly connected to bottoms of the front end pillars by corresponding ones of the fasteners.

13. The body-on-frame pickup truck according to claim 5, wherein the frame cross-members further comprise a fifth cross-member and a sixth cross-member located in the rear frame section, and the sixth cross-member is disposed at rear end surfaces of the pair of frame rails and closes rear ends of the pair of frame rails.

14. The body-on-frame pickup truck according to claim 13, wherein
a first cargo box cross-member, a second cargo box cross-member, and a third cargo box cross-member are sequentially arranged at intervals at a bottom of the cargo box;
the first cargo box cross-member is rigidly connected to the frame rails;
the second cargo box cross-member is located above the fifth cross-member and is rigidly connected to the fifth cross-member; and
the third cargo box cross-member is located above the sixth cross-member and is rigidly connected to the sixth cross-member.

15. The body-on-frame pickup truck according to claim 4, wherein
the front frame section and the rear frame section are higher than the middle frame section; and
a front portion of each of the frame rails and a rear portion of each of the frame rails are both recessed toward an inner side of the vehicle body relative to a middle portion of each of the frame rails.

16. The body-on-frame pickup truck according to claim 1, wherein the plurality of fasteners are symmetrically arranged.
